# EUROPÄISCHE PATENTSCHRIFT

(11) **EP 0 631 361 B1**
(45) Veröffentlichungstag und Bekanntmachung des Hinweises auf die Patenterteilung: **14.07.1999**
(21) Anmeldenummer: 94108658.9
(22) Anmeldetag: 07.06.1994
(51) Int. Cl.: H02H 7/085, B60N 2/02

(54) **Überlastschutz mit Prioritätsschaltung für Elektromotore, insbesondere bei verstellbaren Kraftfahrzeugsitzen**
Overload protection with priority circuit for electric motors, especially for adjustable car seats
Circuit de protection contre une surintensité avec circuit de priorité pour moteurs électriques, notamment pour sièges de véhicules automobiles réglables

(30) Priorität: 19.06.1993 DE 4320352
(43) Veröffentlichungstag der Anmeldung: 28.12.1994
(73) Patentinhaber: ITT Automotive Europe GmbH, 60488 Frankfurt am Main (DE)
(72) Erfinder: Mach, Jiri, D-71397 Leutenbach (DE); Scheele, Hubert, 74189 Weinsberg (DE)
(74) Vertreter: Dreiss, Fuhlendorf, Steimle & Becker

(56) Entgegenhaltungen:
- EP-A- 0 097 586
- FR-A- 2 339 271

## Beschreibung

Die Erfindung betrifft eine Strombegrenzung für Elektromotore insbesondere für Kraftfahrzeugsitze. Bei derartigen Antrieben kann es leicht passieren, daß der verschiebbare Sitz gegen ein Hindernis, beispielsweise ein im unteren Bereich des Fahrgastraumes verstautes Gepäckstück, auflaufen kann, wodurch die Fortbewegung des Sitzes verhindert wird. Um hier eine Überlastung des weiterarbeitenden Elektromotors zu verhindern, sind beispielweise Schaltungen bekannt geworden, die eine Überlastung des Motors mit Hilfe eines Bimetallschalters verhindern. Wird der Bimetallschalter zu warm, so trennt er den Kreis auf und schaltet ihn erst nach hinreichender Abkühlung des Kontaktes und damit auch nach einer entsprechenden Abkühlung des Motors wieder ein. Nachteilig bei einer derartigen Schaltung ist die träge Arbeitsweise des Bimetallschalters. Wird nämlich von der Bedienungsperson das der Sitzbewegung im Wege stehende Hindernis beseitigt, so läuft bei aufgetrenntem Thermoschalter der Motor gleichwohl nicht an, obwohl eine erneute Einschaltung des Motors nun nicht mehr zu einer Überlastung führen kann. Andererseits kann der Motor nach Beseitigung des Hindernisses zu einem Zeitpunkt anlaufen, bei dem die Bedienungsperson mit der Bewegung des Fahrzeugsitzes nicht mehr rechnet.

Aus der DE-OS 2 933 093 ist es weiterhin bekannt geworden, den Fahrzeugsitz mit Hilfe eines Endschalters abzuschalten und danach die Umkehr der Bewegungsrichtung des Sitzes und dessen Weitertransport bis in seine Ausgangslage automatisch zu veranlassen. Eine derartige Sitzsteuerung entspricht vielfach nicht den Wünschen der Bedienungsperson, die die alte Lage des Sitzes gerade in einer bevorzugten Richtung ändern möchte, so daß die schon in der gewünschten Richtung erfolgte Bewegung des Sitzes nicht mehr umgekehrt werden sollte.

Aus der DE-OS 3 137 150 ist weiterhin eine Logikschaltung bekannt geworden, die bei bestimmten Einstellungen des Sitzes den Antriebsmotor automatisch abschaltet, bei der es leicht zu einer Überlastung des Motors kommen könnte. Eine derartige Schaltung ist vergleichsweise aufwendig und schließt nur ganz bestimmte Sitzpositionen aus, bei denen regelmäßig der Antrieb überlastet wird. Bei unerwarteten Hindernissen ist dagegen eine derartige Schaltung wirkungslos.

Schließlich geht aus der EP-A-0 097 586 eine Schutzschaltung hervor, welche einen Motorstromkreis und zwei weitere Stromkreise aufweist. Einer der Stromkreise ist mit einem elektrischen Widerstand versehen, welcher es erlaubt, den Motorstrom zu reduzieren. Eine Unterbrechung des Motorstroms ist nicht möglich. Ferner sind die einzelnen elektrischen Bauelemente der elektrischen Kreise sorgfältig aufeinander abzustimmen.

Die Erfindung geht daher aus von einer Sicherheitschaltung der sich aus dem Oberbegriff des Anspruchs 1 ergebenden Gattung.

Aufgabe der Erfindung ist es, eine derartige Sicherheitsschaltung einfach aufzubauen und gleichzeitig dafür zu sorgen, daß der Überlastzustand umgehend dann aufgehoben wird, sobald das der Fahrbewegung des Sitzes im Wege stehende Hindernis beseitigt ist.

Die Erfindung wird durch die sich aus dem kennzeichnenden Teil des Hauptanspruchs ergebende Merkmalskombination gelöst. Die Erfindung besteht im Prinzip also darin, daß ausschließlich bei Überlast über den ersten Kreis ein den Motorkreis öffnender Strom fließt, während der die Durchschaltung des Motorkreises unterstützende zweite Kreis während der Sitzbetätigung ständig durchgeschaltet bleibt. Auf diese Weise wird unabhängig von der Lage des Trennkontaktes des zweiten Relais bei jeder Betätigung des Sitzes der Versuch unternommen, diesen zu schließen. Eine für die Öffnung dieses Trennkontaktes wirkender Strom kann durch den zweiten Kreis nur dann fließen, wenn der Arbeitskontakt des ersten Relais durch den Überlastungstrom geschlossen und ein im Sinne der Betätigung des Trennkontaktes fließender Strom auftritt.

Eine besonders einfache Ausgestaltung für die Sicherheitsschaltungen erhält man durch Anwendung der Merkmalskombination nach Anspruch 2. Auf diese Weise wird eine Art Prioritätsschaltung mit einfachen Mitteln geschaffen, bei der der über die erste Wicklung im ersten Kreis fließende Öffnungsstrom den im zweiten Kreis immer bei Sitzbetätigung fließenden Schließstrom überwindet. Eine weitere vorteilhafte Weiterbildung der Erfindung ergibt sich aus der Merkmalskombination nach Anspruch 3. Danach reicht der im zweiten Kreis über die zweite Wicklung fließende Strom sicher zum Schließen des Trennkontaktes und damit Einschalten des Motors aus, sobald der Überlaststrom im Motor beseitigt und damit der Arbeitskontakt des ersten Relais geöffnet ist. Eine weitere Vereinfachung der erfindungsgemäßen Sicherheitsschaltung ergibt sich durch die Anwendung der Merkmalskombination nach Anspruch 4. Durch diese Maßnahme läßt sich in besonders einfacher Weise eine Prioritätsschaltung erreichen, bei der der Öffnungsstrom, sobald er fließt, die Wirkung des bei Sitzbetätigung permanent fließenden Schließstroms überwindet und somit für ein schnelles Öffnen des Motorkreises sorgt.

Ein kostengünstiges und schnell schaltendes erstes Relais erhält man durch die Anwendung der Merkmalskombination nach Anspruch 5. Hierdurch steht sofort dann ein ausreichender Strom zum Transport des Sitzes zur Verfügung, sobald das Hindernis entfernt ist. Andererseits schaltet das Reedrelais unmittelbar nach Öffnen des Trennschalters im Motorkreis und damit dem Unterbrechen des Überlaststromes wieder den Arbeitskontakt und bringt diesen somit in sperrende Ruhestellung. Als Folge davon macht sich unmittelbar darauf die Schließwirkung des Schließstroms im zweiten Kreis am zweiten Relais bemerkbar und der Motorkreis wird wieder eingeschaltet. Durch eine entsprechende Dimensionierung der Startimpulse wird durch diesen impulsweisen Startversuch des Motors dieser aber nicht überlastet.

In Weiterbildung der Erfindung läßt sich die Merkmalskombination nach Anspruch 6 anwenden. Hierdurch ist es in einfacher Weise möglich, die Sicherheitsschaltung auch dann anzuwenden, wenn durch einen Stromrichtungsumkehrschalter die Stromrichtung des Motors umschaltbar ist.

Eine Entlastung des Motors läßt sich weiterhin durch die Merkmalskombination nach Anspruch 7 erreichen, in dem der Motor nur dann eingeschaltet wird, wenn tatsächlich eine Bewegung des Sitzes erwünscht ist. Eine weitere Energieersparnis läßt sich durch die Merkmalskombination nach Anspruch 8 erreichen, in dem der Schließstrom nur dann in den zweiten Kreis eingeleitet wird, wenn über den Schalter zum Einschalten des Sitzstromes ein Strom im Motorkreis fließt. Dabei kann in vorteilhafter Weise der den zweiten Kreis an die Gleichstromquelle anschließende Umschalter als Kontakt des Stromrichtungsumkehrschalters ausgestaltet sein.

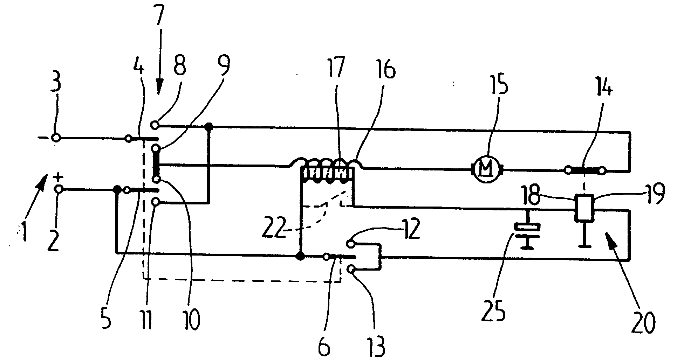

Ein Ausführungsbeispiel der Erfindung wird nachfolgend anhand der Zeichnung erläutert.

Die Figur zeigt eine Gleichstromquelle 1 mit einem positiven Anschlußpunkt 2 und einem negativen Anschlußpunkt 3. Die Anschlußpunkte 2 und 3 sind zu den beweglichen Kontakten 4, 5, und 6 eines Wechselschalters 7 geführt. Der Wechselschalter weist eine in der Zeichnung dargestellte neutrale Stellung auf, in der die beweglichen Kontakte 4, 5 und 6 von den sich anschließenden Stromkreisen abgetrennt sind.

Zwischen den ortsfesten Kontakten 8, 11 und 9, 10 liegt ein Motorkreis, bei dem ein Trennkontakt 14 mit einem Motor 15 und einer Wicklung 16 für einen Reedschalter in Reihe geschaltet ist. Ist beispielsweise der Wechselschalter 7 aus seiner in der Zeichnung dargestellten neutralen Lage heraus durch eine nach unten gerichtete Bewegung der beweglichen Kontakte 4 und 5 eingeschaltet, so fließt ein Strom von dem positiven Anschlußpunkt 2 über den beweglichen Kontakt 5, den ortsfesten Kontakt 11, den Trennkontakt 14, den Motor 15, die Spule 16 zu dem ortsfesten Kontakt 9 und von dort über den beweglichen Kontakt zum negativen Anschlußpunkt 3. Der Motor 15 wird dadurch in einer durch die Stellung des Wechselschalters 7 vorgegebenen Drehrichtung angetrieben und kann seine Antriebsleistung verrichten, beispielsweise durch Verschieben eines Kraftfahrzeugsitzes in einer bestimmten Richtung.

Die in der Zeichnung dargestellte Schaltung weist noch zwei weitere Kreise auf. Der eine Stromkreis verläuft vom positiven Anschlußpunkt über einen Reedkontakt 17 und eine erste Wicklung 18 eines zweiten Relais 20 nach Masse, wobei Masse mit dem negativen Anschlußpunkt 3 verbunden ist. Dieser Schaltkreis wird nachfolgend als erster Kreis bezeichnet. Weiterhin gibt es noch einen zweiten Kreis, der von dem positiven Anschlußpunkt 2 über den beweglichen Kontakt 6 einer der ortsfesten Kontakte 12, 13 über eine zweite Wicklung 19 des zweiten Relais 20 nach Masse führt. In der Zeichnung ist die Wirkung des Reedkontaktes 17 in gestrichelter Form als Arbeitskontakt 22 angedeutet. Weiter oben war schon beschrieben worden, wie durch Kontaktgabe der Kontakte 4 und 9 bzw. 5 und 11 ein Strom über den Motorkreis fließt. Solange der Strom so klein ist, daß der Motor 15 nicht überlastet wird, ist auch die Reedschalterwicklung 16 nicht in der Lage, den Reedkontakt (das heißt den Arbeitskontakt 22) zu schließen. Infolgedessen bleibt der erste Kreis aufgetrennt und es fließt kein Strom über die erste Wicklung 18. Dagegen fließt durch den zweiten Kreis Strom, da wegen der Betätigung des Wechselschalters 7 auch die Kontakte 6 und 13 miteinander verbunden sind, so daß ein Strom über die zweite Wicklung 19 des zweiten Relais 20 fließt. Die Relaiswicklung 19 ist derart angeordnet, daß der beschriebene Stromfluß zum Schließen des Trennkontaktes 14 führt bzw. diesen geschlossen hält. Damit hat die gezeigte Schaltung bei fehlender Überlastung des Motors 15 einen stabilen Zustand erreicht.

Nimmt man nun an, daß der Kraftfahrzeugsitz gegen ein Hindernis läuft, so steigt der Strom in dem Motorkreis stark an, was zu einer Überlastung des Motors 15 führen kann. Aufgrund des großen Stromanstieges wird die induktive Wirkung der Reedschalterwicklung 16 derart verstärkt, daß der Reedkontakt 17 (d.h. Arbeitskontakt 22) schließt. Auf diese Weise fließt auch durch den ersten Kreis über den Arbeitskontakt 22 und die erste Wicklung 18 ein Strom. Damit liegt an den Wicklungen 18, 19 etwa die gleiche Spannung an, wobei die erste Wicklung 18 gegensinnig zur zweiten Wicklung 19 im Sinne einer Öffnung des Trennkontaktes 14 wirkt. Die Induktivität der ersten Wicklung 18 ist aber derart viel größer als die der zweiten Wicklung 19, so daß bei gleicher Spannung an beiden Wicklungen sich die Wirkung der ersten Wicklung 18 gegenüber der der zweiten Wicklung 19 durchsetzt und damit den Trennkontakt 14 öffnet.

Als Folge davon bricht der Strom in dem Motorkreis 15 zusammen, wodurch auch die Wirkung der Reedschalterwicklung 19 unwirksam wird (was bedeutet, das der Arbeitskontakt 22 öffnet). Als Folge davon wird die erste Wicklung 18 wiederum vom Stromfluß abgetrennt, während der Stromfluß über die zweite Wicklung 19 erhalten bleibt. Zeitlich verzögert schließt also der Trennkontakt 14 wieder. Die zeitliche Verzögerung der Schaltvorgänge ist dabei derart dimensioniert, daß sich eine Schaltfreuquenz bei Überlast ergibt, die nicht zu einer Überlastung des Motors 15 führen kann. Wird nun beispielsweise durch Beseitigen eines Hindernisses die Fortbewegung des Kraftfahrzeugsitzes freigegeben, so entfällt auch der Überlaststrom, der Arbeitskontakt 22 bleibt geöffnet, wodurch auch der Trennkontakt 14 geschlossen bleibt.

Hat schließlich der Kraftfahrzeugsitz die gewünschte Stellung erreicht, so wird der Wechselschalter 7 in seine neutrale Stellung gebracht, in der die Kontakte 4, 5, und 6 frei enden und an keinem Gegenkontakt anliegen. Die beschriebenen Schaltkreise sind alle stromlos bis auf Kreis 2, über welchen ein geringfügiger Dauerstrom fließt. Falls dieser Strom unerwünscht ist, kann aber auch durch zusätzliche Kontakte am Wechselschalter dafür gesorgt werden, daß in neutraler Stellung des Wechselschalters über die zweite Wicklung kein Strom fließen kann.

Weiter oben wurde der Stromfluß durch den Motorkreis für den Fall beschrieben, daß die Kontakte 4 und 9 bzw. 5 und 11 miteinander verbunden sind. Wird die Bewegung der beweglichen Kontakte 4, 5 des Wechselschalters 7 in entgegengesetzter Richtung in der Zeichnung nach oben bewegt, so haben die Kontakte 4 und 8 bzw. 5 und 10 miteinander Kontakt. An der Wirkung der Schaltung ändert sich dabei nur insofern etwas, als nun der Strom über den Motorkreis in umgekehrter Richtung fließt. Einen Einfluß auf das zweite Relais 20 hat die Umpolung des Wechselschalters nicht.

Es empfiehlt sich, wie in der Figur gezeigt, den Eingang der Wicklung 18 über einen Kondensator 25 mit erheblicher Kapazität zu erden. Hierdurch läßt sich verhindern, daß eine Einschaltstromspitze das durch die Spule 18 betätigte Relais schaltet und somit unerwünschter Weise den Schalter 14 kurzzeitig öffnet. Mit anderen Worten ausgedrückt, soll verhindert werden, daß durch die Einschaltstromspitze der Überlastzustand der Schutzschaltung erreicht werden kann.

## Patentansprüche

1. Sicherheitsschaltung zum Überlastschutz für Elektromotoren (15), insbesondere für den Antrieb von verstellbaren Sitzen in Kraftfahrzeugen, wobei der Motorstrom über eine Wicklung (16) eines ersten Relais (16, 17, 22) und den Trennkontakt (14) eines zweiten Relais (20) läuft, sowie mit einem, dem Motorkreis parallel geschalteten ersten und zweiten Kreis dadurch **gekennzeichnet,** daß der erste Kreis, über den Arbeitskontakt (22) des ersten Relais (16, 17, 22) und eine erste Wicklung (18) des zweiten Relais (20) verläuft und der zweite Kreis über eine zweite Wicklung (19) des zweiten Relais (20) verläuft und daß ein über den ersten Kreis (2, 22, 18) fließender Strom im Sinne einer Öffnung des Trennkontaktes (14) und ein über den zweiten Kreis (5, 6, 19) fließender Strom im Sinne einer Schließung des Trennkontaktes (14) wirksam ist.

2. Sicherheitsschaltung nach Anspruch 1, dadurch **gekennzeichnet**, daß bei annähernd gleichgroßer, an der ersten und der zweiten Wicklung (18 bzw. 19) anliegender Spannung die durch die beiden Wicklungen fließenden Ströme den Kontakt (14) öffnen bzw. offen halten.

3. Sicherheitsschaltung nach Anspruch 2, dadurch **gekennzeichnet**, daß bei in Folge des Arbeitskontaktes (22) unterbrochenem ersten (5, 22 18) Kreis der allein über den zweiten Kreis fließende Strom den Trennkontakt (14) schließt bzw. geschlossen hält.

4. Sicherheitsschaltung nach einem der vorangegangenen Ansprüche, dadurch **gekennzeichnet,** daß die beiden Wicklungen (18, 19) des zweiten Relais (20) gegensinnig gewickelt sind und die Induktivität der ersten Wicklung hinreichend größer als die der zweiten Wicklung ist.

5. Sicherheitsschaltung nach einem der vorangegangenen Ansprüche, dadurch **gekennzeichnet,** daß das erste Relais (16, 17, 22) als Reedrelais ausgestaltet ist, wobei die Wicklung (16) einer Reedspule und der Arbeitskontakt (22) ein Reedkontakt ist.

6. Sicherheitsschaltung nach einem der vorangegangenen Ansprüche, dadurch **gekennzeichnet,** daß zur Drehrichtungsumkehr des Motors (15) der Motorkreis über einen Stromrichtungsumkehrschalter (7) an eine Stromquelle (1) anschließbar ist.

7. Sicherheitsschaltung nach Anspruch 6, dadurch **gekennzeichnet,** daß der Stromrichtungsumkehrschalter (7) zum Stillsetzen des Motors (15) eine neutrale Stellung besitzt.

8. Sicherheitsschaltung nach Anspruch 6 oder 7, dadurch **gekennzeichnet,** daß ein Pol (2) der Spannungsquelle (1) über einen weiteren Kontakt (6, 12, 13) des Stromrichtungswechselschalters (7) mit dem zweiten Kreis (19) verbunden ist.

9. Sicherheitsschaltung nach einem der vorangegangenen Ansprüche, dadurch **gekennzeichnet,** daß der ersten Wicklung (18) ein Kondensator (25), vorzugsweise Elektrolytkondensator, parallel geschaltet ist.

## Claims

1. Safety switching system providing overload protection for electric motors (15), and particularly for the drive used in adjustable seats in vehicles, whereby the motor current runs via a winding (16) of a first relay (16, 17, 22) and the break contact (14) of a second relay (20), and distinguished by the fact that the first circuit runs through the operating contact(22) of the first relay (16, 17, 22) and a first winding (18) of the second relay (20), and the second circuit runs through a second winding (19) of the second relay (20), and that a current flowing through the first circuit (2, 22, 18) effectively opens the break contact (14), and a current flowing through the second circuit (5, 6, 19) effectively closes the break contact (14).

2. Safety switching system as per claim 1, distinguished by the fact that when the voltages at the first and second winding (18 and 19) are approximately equal, the currents flowing through the two winding open or keep open the contact (14).

3. Safety switching system as per claim 2, distinguished by the fact that, as a result of the first circuit (5, 22, 18) being interrupted by the operating contact (22), the current flowing just through the second circuit either closes or keeps closed the break contact (14).

4. Safety switching system as per one of the previous claims, distinguished by the fact that the two windings (18, 19) of the second relay (20) are counter-wound to each other and that the inductivity of the first winding is sufficiently larger than that of the second winding.

5. Safety switching system as per one of the previous claims, distinguished by the fact that the first relay (16, 17, 22) is set up as a reed relay, in which the winding (16) of a reed spool and the operating contact (22) constitutes a reed contact.

6. Safety switching system as per one of the previous claims, distinguished by the fact that, in order to reverse the direction of the motor (15), the motor circuit can be connected to a voltage source (1) via a current reverse switch (7).

7. Safety switching system as per claim 6, distinguished by the fact that the current reverse switch (7) has a neutral position for halting the motor (15).

8. Safety switching system as per claim 6 or 7, distinguished by the fact that one pole (2) of the voltage source (1) is connected into the second circuit (19) via another contact (6, 12, 13) of the current reverse switch.

9. Safety switching system as per one of the previous claims, distinguished by the fact that the first winding (18) is wired in parallel to a condenser (25), preferably an electrolytic condenser.

## Revendications

1. Circuit de sécurité permettant de protéger d'une surcharge un moteur électrique (15), servant notamment à un entraînement de siège réglable dans un véhicule automobile, dans lequel le courant de moteur passe par un enroulement (16) d'un premier relais (16, 17, 22) et le contact de coupure (14) d'un second relais (20), le circuit de sécurité comportant également un premier et un second circuits branchés en parallèle au circuit de moteur, caractérisé en ce que le premier circuit passe par le contact de travail (22) du premier relais (16, 17, 22) et un premier enroulement (18) du second relais (20) et le second circuit passe par un second roulement (19) du second relais (20) et en ce qu'un courant passant dans le premier circuit (2, 22, 18) agit dans le sens d'une ouverture du contact de coupure (14) et un courant passant dans le second circuit (5, 6, 19) agît dans le sens d'une fermeture du contact de coupure (14).

2. Circuit de sécurité suivant la revendication 1, caractérisé en ce qu'en cas de tension sensiblement égale appliquée sur le premier et le second enroulements (respectivement 18, 19), les courants passant dans les deux enroulements ouvrent ou maintiennent ouvert le contact (14).

3. Circuit de sécurité suivant la revendication 2, caractérisé en ce que, dans le cas où le premier circuit (5, 22,18) est interrompu par l'action du contact de travail (22), le courant passant dans le second circuit ferme ou maintient fermé, à lui seul, le contact de coupure (14).

4. Circuit de sécurité suivant l'une des revendications précédentes, caractérisé en ce que les deux enroulements (18, 19) du second relais (20) sont enroulés dans des sens opposés et l'inductance du premier enroulement est suffisamment supérieure à celle du second enroulement.

5. Circuit de sécurité suivant l'une des revendications précédentes, caractérisé en ce que le premier relais (16, 17, 22) est réalisé sous forme d'un relais à lame, l'enroulement (16) étant une bobine de relais à lame et le contact de travail (22) un contact de relais à lame.

6. Circuit de sécurité suivant l'une des revendications précédentes, caractérisé en ce que, pour l'inversion de sens de rotation du moteur (15), le circuit de moteur peut être raccordé à une source de courant (1) par l'intermédiaire d'un commutateur-inverseur de sens de courant (7).

7. Circuit de sécurité suivant la revendication 6, caractérisé en ce que le commutateur-inverseur de sens de courant (7) possède une position neutre pour la mise à l'arrêt du moteur (15).

8. Circuit de sécurité suivant la revendication 6 ou 7, caractérisé en ce qu'un pôle (2) de la source de courant (1) est relié au second circuit (19) par l'intermédiaire d'un autre contact (6, 12, 13) du commutateur-inverseur de sens de courant (7).

9. Circuit de sécurité suivant l'une des revendications précédentes, caractérisé en ce qu'un condensateur (25), de préférence un condensateur électrochimique, est branché en parallèle sur le premier enroulement (18).
